# NEUE EUROPÄISCHE PATENTSCHRIFT

(11) **EP 0 238 014 B2**
(45) Veröffentlichungstag und Bekanntmachung des Hinweises auf die Entscheidung über den Einspruch: **15.04.1998**
(45) Hinweis auf die Patenterteilung: 02.09.1992
(21) Anmeldenummer: 87103771.9
(22) Anmeldetag: 16.03.1987
(51) Int. Cl.: C09J 7/02

(54) **Thermoplastische Membranfolie, Verfahren zu ihrer Herstellung und Vorrichtung zur Durchführung des Verfahrens**
Thermoplastic membrane, process for its manufacture and apparatus for performing the same
Membrane thermoplastique, son procédé de fabrication et appareillage pour la mise en oeuvre de ce procédé

(30) Priorität: 15.03.1986 DE 3608758
(43) Veröffentlichungstag der Anmeldung: 23.09.1987
(73) Patentinhaber: LAINIERE DE PICARDIE, 80202 Péronne Cédex (FR)
(72) Erfinder: Krause, Ulrich Eckhard, D-5750 Menden 1 (DE)
(74) Vertreter: Patentanwälte Dr. Solf & Zapf

(56) Entgegenhaltungen:
- EP-A- 0 097 957
- DE-A- 1 777 017
- DE-A- 2 214 236
- DE-A- 2 854 464
- DE-C- 3 419 867
- US-A- 4 183 978
- US-A- 4 443 511
- Bulletin Textile International, Nr. 2, 1983, S. 99-102
- P. Sroka "Handbuch der Textilen Fixiereinlagen", 1980, S. 11-15, 62-63, 84-85
- Journal of Coated Fabrics, Nr, 15, 1985, S. 40-63

## Beschreibung

Die Erfindung betrifft eine mit einem Klebstoff versehene thermoplastische Membranfolie, ein Verfahren zur Herstellung der Membranfolie und eine Vorrichtung zur Durchführung des Verfahrens.

Es sind hauchdünne, sehr geschmeidige thermoplastische Polyester- und Polyurethan-Membranfolien bekannt (z.B. Sympatex, Walopur), die absolut wasser- und winddicht sind, dabei aber eine relativ hohe Wasserdampfdurchlässigkeit gewährleisten. Diese atmungsaktiven Folien können chemisch gereinigt und gewaschen werden. Es ist vorgeschlagen worden, die Folien mit Textilien vollflächig zu laminieren, um die guten Eigenschaften der Folien den Textilien beizugeben. Die Folie soll unter z.B. den Oberstoff eines textilen Erzeugnisses laminiert werden. Das textile Erzeugnis soll dadurch wasser- und winddicht gemacht werden, jedoch die vom Körper verdunstete Feuchtigkeit durchlassen (Atmungsaktivität). Es hat sich jedoch gezeigt, daß das vollflächige Laminieren oft keinen ausreichenden Verbund mit cem Oberstoff schafft, so daß sich Oberstoff und Folie leicht voneinander lösen lassen.

Außerdem beeinflußt der vollflächige Verbund die Griffigkeit der Textilie ungünstig. Obwohl die Folie selbst sehr weich und geschmeidig ist, führt das Laminat zu einer Textilie, die erheblich steifer ist als ohne Folie, so daß insbesondere weiche Textilien nicht mit der Folie ausgerüstet werden können.

Bei der vorgeschlagenen Laminatkombination aus Membranfolie und Textilie geht außerdem ein überwiegender Teil der Wasserdampfdurchlässigkeit verloren, so daß insbesondere auch diese Eigenschaft der Folie nicht optimal genutzt werden kann. Die Folie konnte daher trotz ihrer prädestinierten Eigenschaften keinen schnellen Eingang in der textilverarbeitenden Industrie finden, obwohl viele Anstrengungen unternommen worden sind, das seit langem bekannte Folienprodukt mit Textilien zu kombinieren, und obwohl kein vergleichbar gutes geeignetes Produkt bekannt ist.

Außer diesen thermoplastischen Membranfolien sind auch alle anderen thermoplastischen Kunststoffolien mit den üblichen Verfahren nur schwer zu Laminaten verarbeitbar, weil die Klebefähigkeit ohne Krumpfen und ohne Verlust der gewünschten Eigenschaften nicht ausreichend bewirkt werden kann.

Aus der US-A-4 443 511 ist ein Laminat bekannt, das aus einer Goretex-Membran und einer Polyether-Polyurethan-Schicht besteht, auf die eine Lycra-Schicht aufgetragen ist. Zur Herstellung des Laminats wird zunächst auf die elastomere Schicht eine Vielzahl von Klebstoffpunkten aufgedruckt, dann die Lycra-Schicht angepreßt und das daraus resultierende Element wird unmittelbar darauf über eine Heizwalze geführt.

Aufgabe der Erfindung ist, die Verwendbarkeit der thermoplastischen Membranfolien zu vermehren und zu vereinfachen, ohne daß die günstigen Eigenschaften der Folien wesentlich eingeschränkt werden.

Diese Aufgabe wird durch die Merkmale des Hauptanspruchs gelöst. Zweckmäßige Ausgestaltungen der Erfindung werden in den Unteransprüchen gekennzeichnet.

Nach der Erfindung wird die Membranfolie mit nicht-klebrigen, trockenen, gesinterten Schmelzkleberpunkten oder dgl. Raster versehen. Die Folie kann aufgewickelt, gelagert und jederzeit mit irgendeinem Substrat unter Aktivierung des Klebstoffs verbunden werden. Vorteilhaft ist die Kombination der Membranfolie mit einer Textilie, weil die Eigenschaften der Folie nur unwesentlich beeinträchtigt werden.

Im Rahmen der Erfindung ist eine Auswahl getroffen worden bezüglich des Verbundverfahrens. Die thermoplastische Membranfolie, wird punktuell mit z.B. der Textilie verbunden. Es ist bekannt, Folien vollflächig mit Textilien zu verkleben. Darüber hinaus ist bekannt, textile Einlagen punktuell mit Oberstoff zu verbinden und Klebstoffpunkte auf den Einlagenstoff oder den Oberstoff aufzubringen. Die Verwendung dieses bekannten Verfahrens zum Verbinden vom Membranfolien mit Textilien lag jedoch nicht nahe, wenn man bedenkt, daß das vollflächige Laminieren oft keinen zufriedenstellenden Verbund schafft. Der Fachmann hat nach Mitteln gesucht, das vollflächige Laminieren zu vervollkommnen. In diesem Zusammenhang erscheint die Verwendung von Klebstoffpunkten widersinnig, wenn bereits großflächige Klebeflächen teilweise versagen.

Beim Laminieren der erfindungsgemäßen Folie mit der Textilie wird dafür gesorgt, daß der Klebstoff der Punkte bei der Aktivierung sich in der Struktur der Textilie verankert bzw. verkrallt derart, daß neben der Nutzung der Adhäsionskraft auch eine mechanische Verhakung stattfindet und somit eine sehr kraftvolle Verbindung geschaffen werden kann. Ein solches Eindringen des Klebstoffes in die Struktur der Textilie läßt sich bei einem vollflächigen Laminieren kaum bewirken, weil dazu eine zu hohe Wärmeenergie erforderlich wäre, bei der z.B. die hauchdünnne Membranfolie zerstört bzw. nachhaltig negativ beeinträchtigt würde.
Der Klebstoff wird zweckmäßigerweise mit Pastenpunktdruckmaschinen auf die Folie aufgetragen. Dazu werden pastenförmige Dispersions-Schmelzkleber ausgewählt, die ohne Erwärmung aufgetragen werden können. Die Folie wird durch den Schmelzkleber weder beim Auftragen des Klebers noch beim Aktivieren beeinträchtigt; denn es wird dafür gesorgt, daß im Falle feuchtigkeitsempfindlicher thermoplastischer. Membranfolien die Menge der Kleberpunkte und deren Verteilung entsprechend gewählt werden. Außerdem werden Schmelzkleber ausgewählt, deren Erweichungstemperatur zur Aktivierung ausreichend unter der Erweichungstemperatur der Folie liegt.

Nach einer besonderen Ausführungsform der Erfindung wird die Schmelzkleber-Paste in geschäumter Form aufgetragen, weil dadurch zum einen das Punktmaterial sehr weich und elastisch wird und zum anderen eine unerwartet starke mechanische Verankerung mit z.B. einer Textilie erzielt werden kann. Anstelle der geschäumten Schmelzkleber-Paste oder in Kombination mit der geschäumten Schmelzkleber-Paste kann eine Schmelzkleber-Paste verwendet werden, die Stoffe bzw. Produkte z.B. sogenannte Mikroballons zugesetzt enthält, die erst beim Laminieren der Folie z.B. mit einer Textilie durch die Einwirkung von Wärmeenergie schäumen.

Besonders geeignet ist eine Schmelzkleber-Paste, die wie folgt zusammengesetzt ist:
35 bis 45. vorzugsweise 39 bis 41(0̸ 40), Gewichtsteile Dispergiermittel
5 bis 15, vorzugsweise 6 bis 8(0̸ 7), Gewichtsteile N-monosubstituiertes Sulfonamid
26 bis 40, vorzugsweise 32 bis 34(0̸ 33), Gewichtsteile Schmelzklebstoff
15 bis 25, vorzugsweise 19 bis 21(0̸ 20), Gewichtsteile Wasser

Als Dispergiermittel dient beispielsweise eine Kombination aus Salzen von Fettsäuren mit wasserlöslichen Polymeren, die die Herstellung stabiler Sekundärdispersionen von Kunststoffpulvern in Wasser ermöglicht. Das N-monosubstituierte Sulfonamid dient zur Herabsetzung des Schmelzpunktes von thermoplastischen Schmelzklebern, vorzugsweise Polyestern, sowie als Haftvermittler zu bestimmten Folientypen. Als Schmelzklebstoff wird beispielsweise ein Klebstoff auf Co-Polyesterbasis mit einem Schmelzpunkt von 80 bis 140°C, vorzugsweise von 100 bis 125°C, verwendet. Die aus den oben angegebenen Bestandteilen zusammengesetzte Pastendispersion kann zusätzlich noch Produkte enthalten, die abgestimmt auf den jeweiligen Folientyp die Oberfläche der Folie anlösen, um z.B. optimale Verbindungen zwischen der Pastendispersion und der Folie zu gewährleisten.

Bevorzugt werden der Pastendispersion sogenannte Mikroballons zugesetzt. Es handelt sich um ein voluminöses, leichtes Produkt in Pulverform. Das Pulverkorn besteht aus einem thermoplastischen Polymer mit eingekapselter Flüssigkeit mit niedrigem Siedepunkt. Durch Wärmeeinwirkung dehnen sich die Kapseln aus. Zur Verfügung stehen verschiedene Typen von Mikroballons, die sich bezüglich der Expansionstemperatur unterscheiden. Die Mikroballons sind unter anderem auch schon für aufschäumende Druckpasten für den Sieb-, Tief- und Flexodruck auf Papier und Textilien verwendet worden, um besondere optische Effekte zu erzielen. Andere Mikroballon-Produkte sind mit z.B. Isobutan als Treibstoff gefüllt. Sie wurden als Füllstoffe Feinpapierrohmischungen zugesetzt, um bestimmte Papiereigenschaften zu verbessern. Die Verwendung im Rahmen der Erfindung ist neu. Sie führt zu einem bisher unbekannten Effekt, nämlich der Verbesserung der Verträglichkeit zwischen Folie und Kleber und der mechanischen Verankerung der Pastenpunkte z.B. in einer Textilie.

Die Pastendispersion wird kalt, d.h. z.B. mit Raumtemperatur, punktweise auf die Folie, die ebenfalls lediglich Raumtemperatur aufweist, aufgedruckt. Dieses Auftragsverfahren beeinträchtigt die hauchdünne Membranfolie in keiner Weise, obwohl diese Folie bei Einwirkung von Wasser zum Krumpfen neigt. Nach dem Auftrag der Pastenpunkte durchläuft die Folie einen Trockner, in dem die Dispersion durch die Einwirkung von Temperaturen, z.B. zwischen 100 bis 150°C, getrocknet wird (Austreiben des Wassers). Dabei kann vorteilhaft sein, die Folie im Trockner genadelt zu führen, um einem eventuellen Krumpfen der Folie entgegenzuwirken. Danach wird die die getrockneten Pastenpunkte tragende Folie in eine Sinterkammer geleitet, in der auf die getrockneten Pastenpunkte Temperaturen zwischen z.B. 140 bis 160°C einwirken. Die Folie wird dabei genadelt transportiert, weil bei diesen relativ hohen Temperaturen in der Sinterkammer die Folie zu stark krumpfen würde. Die Einwirkung der Wärmeenergie auf die getrockneten Pastenpunkte führt zum Ausgelieren des Klebstoffes, so daß ein thermoplastischer Klebstoff entwickelt wird. Die Folie wird nach dem Durchlaufen der Sinterkammer auf Raumtemperatur gebracht und steht dann zur Kombination mit einem Substrat, z.B. einer Textilie, zur Verfügung, oder sie wird nach der Sinterkammer direkt z.B.. mit einer oder mehreren Textilbahnen laminiert. Beim Transport der Folie während des Pastenpunktauftragsverfahrens wird nach der Erfindung kein Zug in Transportrichtung auf die Folie ausgeübt, weil die hohe Elastizität der Folie zu erheblichen Formveränderungen führen würde.

Vorzugsweise werden die Pastenpunkte mit einem Raster von 1 bis 40, insbesondere von 11 bis 17 mesh pro inch, aufgedruckt. Die verwendete Pastendispersionsmenge beträgt dabei vorzugsweise 2 bis 50, insbesondere 10 bis 30 g/m².

Die mit dem thermoplastischen Klebstoff punktweise beschichtete Membranfolie kann z.B. im Heißsiegelverfahren mit einer Textilie kombiniert werden. Dabei verankern sich die Klebstoffbereiche in der Struktur der Textilie und führen zu einem Verbund, der ungewöhnlich fest ist. Durch die punktweise Anordnung des Klebemittels bleiben die Eigenschaften der Folie erhalten und dienen der Textilie nahezu uneingeschränkt. Die Weichheit und Griffigkeit der Textilie wird kaum beeinträchtigt. Insofern stört die Membranfolie auch nicht, wenn zusätzlich auf die Textilie Einlagen. z.B. Mehrbereichseinlagen, fixiert werden. In überraschender Weise kann die Fixierung sogar auf der Folie erfolgen, ohne daß die Eigenschaften der Folie beeinträchtigt werden. Ein mit der Membranfolie versehenes textiles Erzeugnis weist somit zwischen der Fixiereinlage und dem Oberstoff die Membranfolie auf.

Das Auftragen der Klebstoffpunkte kann auf nur einer Oberfläche der Folie erfolgen. Vorzugsweise wird auf beide Oberflächen aufgetragen, so daß die Folie beidseitig verklebbar ist. Erfindungsgemäß können auf beiden Seiten gleiche Punkte aufgetragen sein. Es können aber auch verschieden große und/oder verschieden geformte Punkte und/oder verschiedene Raster und/oder verschiedene Klebstoffe mit z.B. unterschiedlichen Trocknungs- und/oder Ausgelier- und/oder Aktivierungstemperaturen verwendet werden. Es ist auch gegebenenfalls vorteilhaft, diese Varianten auf nur einer Seite der Folie einzusetzen.

Anhand des in der Zeichnung abgebildeten Beispieles wird die Erfindung im folgenden näher erläutert. Es zeigen:
- Fig. 1: perspektivisch ein Membranfolienstück mit Punkten aus einem thermoplastischen Klebstoff,
- Fig. 2: schematisch eine Anlage zur Beschichtung der Membranfolie mit Klebstoffpunkten.

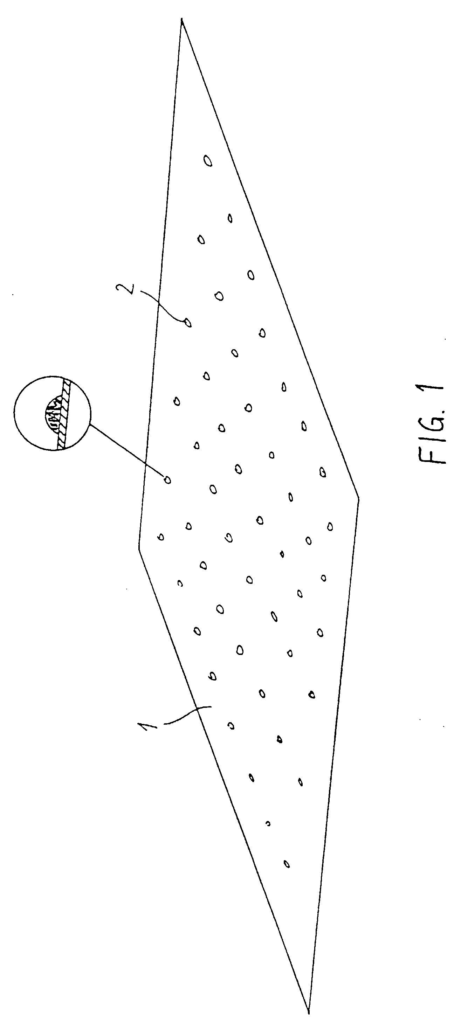

Die Membranfolie 1 (Fig. 1) ist 10-100 µm dick und durchsichtig, opak oder undurchsichtig eingefärbt. Sie hat ein Gewicht von 10-200 g/m² und ist sehr weich und ggf. elastisch. Auf einer ihrer Oberflächen trägt sie rasterartig angeordnet Klebstoffpunkte 2 (Klebstoffmasse in geringer Menge), wobei die Masse eines Klebstoffpunktes 2 aus einem Thermoplast besteht. Vorzugsweise ist die Masse der Kunststoffpunkte 2 geschäumt und/oder enthält sogenannte Mikroballons (nicht dargestellt).

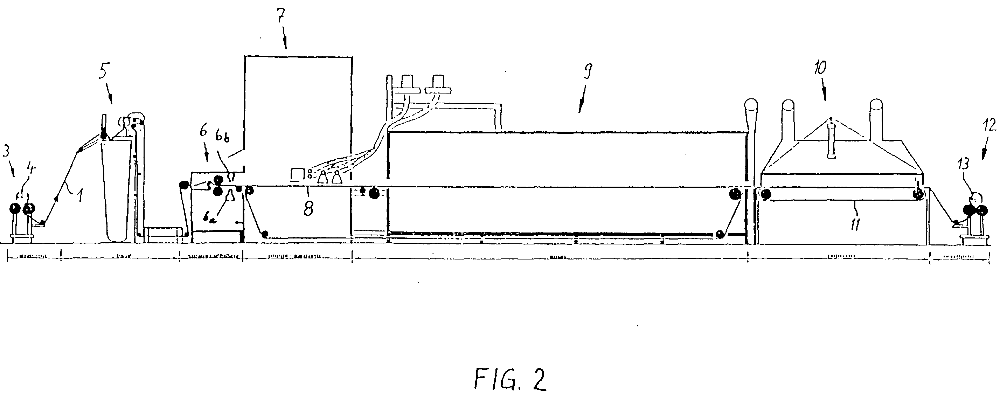

Die in Fig. 2 abgebildete Anlage zur Herstellung der erfindungsgemäßen Membranfolie mit Klebstoffpunkten weist ein Abwickelgerät 3 auf, in dem eine Folienrolle 4 gelagert, exakt positioniert und spannungslos über Abtriebsmittel abgewickelt wird. Dabei wird auf die Foiie nahezu kein Querzug ausgeübt. Vorzugsweise ist dem Abwickelgerät 3 ein Einlaufgerät 5 nachgeordnet, in dem die Folie mittels Breithaltern und mit minimaler Längsspannung geführt und faltenfrei transportiert wird. Die Folie 1 verläßt das Einlaufgerät 5 und wird in eine Pastenpunktrotationssiebdruckanlage 6 befördert. Hier wird eine einen thermoplastischen Klebstoff enthaltende Dispersionspaste in einem bestimmten Raster und in einer bestimmten Menge aufgedruckt. Danach gelangt die mit der Paste bedruckte Folie in einen Trockner 9, durch den sie auf einem Trageband 8 transportiert wird. Im Trockner 9 herrschen vorzugsweise Temperaturen zwischen 100 und 150°C. Dem Trockner 9 kann zweckmäßigerweise eine Antistatikklimakammer 7 vorgeordnet sein, in der die Folie mit einem Antistatikmittel besprüht wird.

Die Folie mit den getrockneten Klebstoffpunkten wird dann von einer Sinterkammer 10 übernommen. Als Transportmittel durch die Sinterkammer 10 dient eine Nadelkette 11. In der Sinterkammer 10 herrschen Temperaturen zwischen 110 und 160°C, vorzugsweise 120-140°C, wodurch die Beschichtung gesintert wird und der thermoplastische Klebstoff entsteht.

Anstelle von Nadelketten können auch Greiferketten mit z.B. Kluppen oder dgl. verwendet werden.

Die Folie wird im Anschluß an die Sinterkammer 10 einem Aufwickelgerät 12 zugeführt, wobei sie auf dem Weg dorthin z.B. in einem Kalander gekühlt wird. In der Aufwickelvorrichtung 12 wird die Folie zur Rolle 13 aufgerollt.

Es kann vorteilhaft sein, die Folie in der Rotationsdruckmaschine vor dem Bedrucken mit einem Haftvermittler zu besprühen, der chemisch mit der Folie verwandt ist.

Soll die Folie unmittelbar nach dem Sintern der Klebstoffpaste mit einer Textilie kombiniert werden, dann kann man am Auslauf der Sinterkammer 10 die Folie mit der Textilie zusammenlaufen lassen und in einem Kalander unter Einwirkung von Wärmeenergie zusammenfügen.

Die erfindungsgemäß beschichtete Membranfolie eignet sich zur thermoplastischen Verklebung mit textilen Flächengebilden aller Art, insbesondere zum Abdichten von textilen Materialien für den Hospitalbereich. Z.B. können Möbelbezugsstoffe auf der linken Seite mit der Folie abgedichtet werden, um eine Sperre gegenüber Flüssigkeiten wie Körperausscheidungen zu erreichen. Ferner können damit Naturprodukte wie Leder und Pelz beschichtet werden, die anschließend tiefziehbar sein sollen bei gleichzeitiger Möglichkeit der Hinterschäumbarkeit. Auch texile Flächengebilde aus Leder und Pelz für den Bekleidungssektor können mit der erfindungsgemäßen Folie beschichtet werden.

Die Kombination mit Duschvorhängen ist besonders vorteilhaft, ebenso wie die Verwendung für z.B. Windelhöschen und jede Art von Bekleidung.

Das Aufdrucken der Pastenpunkte erfolgt nach dem Rotations- oder Flachsiebdruckverfahren. Eingesetzt werden Druckmaschinen, die nach dem Tiefdruckverfahren, Offsetverfahren oder Hochdruckverfahren arbeiten. Diese Maschinen können sowohl nach dem Rotations- als auch nach dem Flachdruck-Schablonenverfahren arbeiten. Die verwendeten Schmelzkleber sind bezüglich ihres chemischen Verhaltens auf den jeweiligen Folientyp abgestimmt. Durch das Trocknen und Sintern wird der Schmelzkleber fest auf der Folie angeordnet. Die Kombination mit einem textilen Flächengebilde erfolgt mit Hilfe der Parameter Temperatur, Druck und Zeit.

Die erfindungsgemäße Folie dient zur Verbindung mit anderen Substraten, wobei die ursprünglichen Eigenschaften nahezu unverändert erhalten bleiben und dem Substrat beigegeben werden sollen.

Eine weitere Verwendbarkeit ergibt sich durch das Vorhandensein der Klebstoffpunkte. Es können mit der Folie relativ lose Stoffe wie z.B. voluminöse watteartige Vliesstoffe laminiert werden, in dem die Folie mit der Vliesstoffoberfläche verklebt wird, woraus ein Verbund resultiert, der der Festigkeit der Folie entspricht. Bei Verwendung der Membranfolie werden auch noch die besonderen Eigenschaften dieser Folie beigegeben. Ist die Folie beidseitig mit Klebstoffpunkten versehen, kann der Vliesstoff sehr einfach mit einem anderen Substrat z.B. einer anderen Textilie einseitig oder beidseitig verklebt werden, wobei die Folie sich in der Mitte befindet.

Eine weitere Verwendungsmöglichkeit der erfindungsgemäßen Folie ist die Nutzung als neuartiges Klebe- und/oder Trennmittel, wobei zudem die besonderen Eigenschaften der Membranfolie beigegeben werden können.

Zu diesen aufgezählten neuen Verwendungen werden im folgenden Beispiele angegeben, die zur Erfindung gehören.

Die punktbeschichtete Folie wird in einem Werkzeug tiefgezogen mittels Vakuum. Dabei wird die Beschichtung außenliegend angeordnet. Es erfolgt dann eine Hinterschäumung mit einem Polyurethanschaum im Werkzeug. Die Beschichtung klebt an der Werkzeugwand nicht fest, da beim Hinterschäumen nur eine Temperatur von etwa 80°C entsteht. Im Falle einer Polyurethanmembranfolie und Polyurethanschaum gehen diese beiden Stoffe beim Hinterschäumen eine innige Verbindung ein. Trennmittel für das Entfernen aus der Form entfällt. Das geformte dreidimensionale Schaumteil weist auf der Oberfläche die thermoplastische Folie mit den Klebstoffpunkten auf und kann mit anderen Substraten thermisch verbunden werden.

Eine Hutablage in einem Kraftfahrzeug kann aus einem glasfaserverstärkten Polyurethanformkörper bestehen, der mit einem Nadelfilz oder einem Teppich auf der Oberseite belegt ist. Vorteilhaft ist, den Nadelfilz oder Teppich mit der erfindungsgemäßen punktbeschichteten Membranfolie zu kaschieren. Der Teppich kann dann in das Werkzeug eingelegt und verformt werden, wobei die Membranfolie innenseitig angeordnet ist. Es erfolgt dann das Hinterschäumen mit dem glasfaserverstärkten Polyurethan, das einen innigen Verbund mit der Folie eingeht.

Im Fahrzeugbereich werden Absorberteile benötigt, die aus dreidimensionalen Formteilen bestehen und die wasserundurchlässig sein müssen. Derartige Teile können hergestellt werden, indem eine punktbeschichtete Polyurethanmembranfolie und ein Schaumträgerteil aufgeheizt werden, wobei die Folie auf das Trägerteil durch Vakuum tiefgezogen wird.

Nach der Erfindung kann auch ein polyurethanschaumflammkaschierter Verbundkörper hergestellt werden, der aus Obermaterial (Gewebe, Gewirke, Vlies, PVC-Schaumfolie), Polyurethanschaum und punktbeschichteter Membranfolie besteht, wobei die Beschichtung der Folie, d.h. die Klebstoffpunkte, außenliegend angeordnet sind. Dieser Verbuna kann thermisch auf ein Trägerteil geklebt werden, z.B. in einen Autohimmel oder in Türseitenteile eines Kraftfahrzeugs. Die Folie dient dabei als Klebemittel, Sperrschicht und erhöhte Schallisolierung.

In Fällen, in denen das Substrat nur eine geringe Festigkeit aufweist, und insbesondere nur aus lose zusammenhängenden Fasern besteht, wie z.B. bei voluminösen Wattevliesen oder Polyurethanschäumen, ist eine Punktbeschichtung mit Klebstoff nicht möglich. Die Klebstoffpunkte würden in dem Material versinken. Zur Gewährleistung des weichen Griffes und von Wasserundurchlässigkeit können derartige Substrate mit der erfindungsgemäßen punktbeschichteten Membranfolie oberflächlich beklebt werden. Ist die Membranfolie beidseitig mit punktförmigem Klebstoff beschichtet. dann kann das Substrat ohne weiteres weiterverklebt werden.

Darüber hinaus gibt es Materialien, wie z.B. Leder, die nicht mit den Klebstoffpunkten beschichtet werden können. Diese Materialien können mit der erfindungsgemäßen Folie beschichtet werden. Trägt die Folie beidseitig Klebstoffpunkte, können die Materialien mit anderen Materialien verklebt werden.

Insbesondere lassen sich Laminate mit den erfindungsgemäßen thermoplastischen Folien herstellen, die mindestens eine Lage eines Flächengebildes aus Natur-, Chemie (regenerierten Cellulosefasern)-. synthetischen,mineralischen oder dgl. Faserstoffen oder Faserstoffen auf Metallbasis aufweisen. Verwendet man für derartige Laminate insbesondere die erfindungsgemäßen thermoplastischen Membranfolien, dann ergibt sich ein Laminat, das eine hohe Zugelastizität aufweist, weil einerseits die Folie diese Elastizität hat und andererseits ein Substrat verwendbar ist, das ebenfalls eine hohe Zugelastizität besitzt.

Die erfindungsgemäße, mit Klebstoffpunkten beschichtete Membranfolie läßt sich hervorragend tiefziehen, so daß sie mit entsprechenden Substraten laminierbar ist, die extrem unregelmäßige Formen aufweisen, wobei das Laminieren in einer Form zur Herstellung des Formkörpers erfolgt. Besonders geeignet sind Membranfolien auf Polyurethan-Ether- oder Polyurethan-Hybrid-Basis, die eine in g/m² x d meßbare Wasserdampfdurchlässigkeit entsprechend DIN 53 122 aufweisen. Diese Folien können einseitig oder beidseitig rasterartig mit den Klebstoffpunkten versehen sein.

Folien der erfindungsgemäßen Art sind 10 bis 100 µm stark und wiegen 10 bis 200 g/m². Sie können als Bahnware oder mit entsprechender Zusatzeinrichtung während der Beschichtung auch als Zuschnitt vorliegen.

Eine besondere Verwendung der erfindungsgemäßen Folie stellt die Beschichtung von Koffer-, Boxen- oder Tascheninnenteilen dar, wobei ein Laminieren durch Tiefziehen erfolgt. Verwendet wird eine beidseitig mit Klebstoffpunkten beschichtete elastische thermoplastische Folie, wobei eine Seite der Folie gegen einen elastischen Stoff, z.B. ein. gewirktes Trikot aus Polyamid, laminiert wird und die andere Seite tiefgezogen in die erhitzte GFK-Schale gebracht und gleichzeitig verklebt wird.

Bei der Herstellung von Automobil-Himmel-Fertigformkörpern, bestehend aus einem thermisch verformbaren Hartschaum, wird der Formkörper mit einem Flächengebilde versiegelt. Hierzu ist die erfindungsgemäße Folie besonders geeignet. Sie wird als Klebemedium zwischen Hartschaum und textilem Himmelmaterial bzw. Hartschaum und Schaum-Himmelmaterial laminiert eingesetzt.

Armaturenbretter im Automobilbereich werden häufig mit Leder laminiert, wobei in den Armaturenbrettern Vertiefungen und andere Raumformen eingebracht sind.

Verwendbar ist ein Laminat aus Leder und erfindungsgemäßer Membranfolie, das mit einem Polyurethanhartschaum kombiniert ist.

Ein weiteres Beispiel für die Verwendung insbesondere der erfindungsgemäßen Membranfolie ist die Verwendung für stark reversibel dehnbare Bekleidungsteile wie Jacken, Mäntel, Hosen, Over- als aus z.B. Polyester-Baumwolle. Diese Produkte werden mit einer erfindungsgemäßen Poly-ether-Membranfolie beschichtet. Das Dehnungsverhalten der Folie entspricht vollkommen dem Dehnungsverhalten des Oberstoffs.

Für Skibekleidung wird zweckmäßigerweise eine beidseitig beschichtete Membranfolie verwendet. Die eine Seite wird mit einem elastischen Oberstoff und die andere mit einem wärmeisolierenden Füllvlies laminiert.

Des weiteren ist vorteilhaft, Möbelbezugsstoff einseitig mit einer elastischen erfindungsgemäßen Membranfolie zu laminieren und dieses Laminat in ein Schäumungswerkzeug tiefzuziehen und zu hinterschäumen.
In gleicher Weise können Automobilbezugsstoffe für z.B. Sitze mit dem entsprechenden Formkörper kombiniert werden, wobei insbesondere eine Polyurethan-ether oder Polyurethan-Hybridfolie der erfindungsgemäßen Art verwendbar sind.

Weitere Beispiele für die Verwendung der erfindungsgemäßen Folien sind Polypropylen-Netze als Wind- oder Pflanzenschutz oder Baumverkleidung. Diese Netze werden mit einer erfindungsgemäßen Folie laminiert, die ausreichend elastisch ist.

Die Erfindung sieht vor, für die Beschichtung der Folien einen Kleber zu verwenden, der jeweils ausreichend weit unter dem Erweichungspunkt der Folie auftragbar und aktivierbar ist, weil die angegebenen Membranfolien temperaturempfindlich sind. Die Beschichtung mit dem Klebstoff muß bei milden Temperaturen erfolgen.

Es gibt eine Reihe von Membranfolien, die hydrophil sind (z.B. Sympatex der Firma Enka). Beim punktweisen Bedrucken dieser Folie mit z.B. wässrigen Dispersionsklebern kommt die Folie mit Wasser in Kontakt. Dabei neigen die Kanten der Folienbahn zum Einrollen. Erfindungsgemäß wird dieses Einrollen dadurch vermieden, daß kurz hinter dem Aufdrucken der Pastenpunkte mit Düsen 6a, 6b Heißluft sowohl auf die Ober- als auch auf die Unterseite der Folie im Bereich der Kanten geblasen wird, so daß sich sehr schnell ein Gleichgewicht im Feuchtigkeitsgehalt beider Folienseiten einstellt. Die in Fig. 2 eingezeichneten Düsen 6a und 6b befinden sich unmittelbar nach dem Pastenauftragssystem 6 sowohl unten als auch oben installiert. Die Heißluftzufuhr ist regelbar. Durch das Anblasen mit Heißluft wird dafür gesorgt, daß die Kantenbereiche eine Temperatur von 100 bis 140°C, vorzugsweise von 110 bis 120°C, aufweisen. Die Luftleistung einer geeigneten Vorrichtung beträgt 10-50 Liter/Sekunde, vorzugsweise 15-25 Liter/Sekunde.

## Patentansprüche

1. Thermoplastische 10 bis 100 µm dicke Membranfolie, die wasser- und winddicht, dabei aber wasserdampfdurchlässig und mindestens auf einer Oberfläche mit Klebstoffpunkten versehen ist, gekennzeichnet durch rasterartig aufgebrachte nichtklebrige, trockene, gesinterte Klebstoffpunkte (2) aus einem als wässrige Dispersionsschmelzkleberpaste aufgetragenen Thermoplast, die durch Trocknung und Sinterung fest auf der Folie angeordnet sind.

2. Folie nach Anspruch 1, **dadurch gekennzeichnet**, daß der Klebstoff geschäumt ist.

3. Folie nach Anspruch 1 und/oder 2, **dadurch gekennzeichnet**, daß der Klebstoff Microballons aufweist.

4. Folie nach einem oder mehreren der Ansprüche 1 bis 3, **dadurch gekennzeichnet,** daß der Klebstoff aufgedruckt ist.

5. Folie nach Anspruch 4, **dadurch gekennzeichnet, daß** der Klebstoff durch ein Pastenpunktdruckverfahren aufgebracht ist.

6. Folie nach einem oder mehreren der Ansprüche 1 bis 5, **dadurch gekennzeichnet,** daß der Schmelzklebstoff ein Klebstoff auf Co-Polyesterbasis ist mit einem Schmelzpunkt von 80 bis 140°C, vorzugsweise von 100 bis 125°C.

7. Folie nach einem oder mehreren der Ansprüche 1 bis 6, **dadurch gekennzeichnet**, daß die Klebstoffpunkte mit einem Raster von 1 bis 40, insbesondere von 11 bis 17 mesh pro inch. aufgedruckt sind.

8. Folie nach einem oder mehreren der Ansprüche 1 bis 7, **dadurch gekennzeichnet**, daß die Klebstoffmenge 2 bis 50, insbesondere 10 bis 30 g/ m², beträgt.

9. Folie nach einem oder mehreren der Ansprüche 1 bis 8, dadurch **gekennzeichnet,** daß das Gewicht der Folie zwischen 10 und 200 g/m², liegt.

10. Folie nach einem oder mehreren der Ansprüche 1 bis 9, dadurch **gekennzeichnet,** daß sie mit einer Textilie kombiniert ist, wobei die Klebstoffpunkte (2) in der Struktur der Textilie verankert bzw. verhakt sind.

11. Folie nach einem oder mehreren der Ansprüche 1 bis 10, **dadurch gekennzeichnet**, daß auf mindestens einer ihrer Oberflächen ein Einlagenstoff angeordnet ist.

12. Folie nach Anspruch 11, **dadurch gekennzeichnet**, daß der Einlagenstoff ein Mehrbereichseinlagenstoff ist.

13. Folie nach Anspruch 10 und/oder 11, **dadurch gekennzeichnet**, daß die Verbindung mit dem Einlagenstoff mit einem Schmelzklebstoff gemäß einem oder mehreren der Ansprüche 1 bis 8 erfolgt ist.

14. Verfahren zur Herstellung einer Folie, insbesondere einer Membranfolie, nach einem oder mehreren der Ansprüche 1 bis 13, dadurch **gekennzeichnet,** daß auf die Folie im Pastenpunktdruckverfahren ein Schmeizkleber in Form einer Dispersionspaste aufgedruckt wird, wobei die Kantenbereiche mit Heißluft erwärmt werden.

15. Verfahren nach Anspruch 14, **dadurch gekennzeichnet**, daß eine Pastendispersion aufgedruckt wird, die den Schmelzkleber im geschäumten Zustand enthält.

16. Verfahren nach Anspruch 14 und/oder 15, **dadurch gekennzeichnet**, daß der Schmelzkleber in der Dispersionspaste Microballons aufweist.

17. Verfahren nach einem oder mehreren der Ansprüche 14 bis 16, **dadurch gekennzeichnet**, daß eine Dispersionsschmelzkleberpaste verwendet wird, die wie folgt zusammengesetzt ist:
35 bis 45, vorzugsweise 39 bis 41(0̸ 40), Gewichtsteile Dispergiermittel
5 bis 15, vorzugsweise 6 bis 8 (0̸ 7). Gewichtsteile N-monosubstituiertes Sulfonamid
26 bis 40, vorzugsweise 32 bis 34(0̸ 33), Gewichtsteile Schmelzklebstoff
15 bis 25, vorzugsweise 19 bis 21(0̸ 20), Gewichtsteile Wasser

18. Verfahren nach Anspruch 17, **dadurch gekennzeichnet**, daß als Dispergiermittel eine Kombination aus Salzen von Fettsäuren mit wasserlöslichen Polymeren verwendet wird.

19. Verfahren nach Anspruch 17 und/oder 18, **dadurch gekennzeichnet**, daß als Schmelzklebstoff ein Klebstoff auf Co-Polyesterbasis verwendet wird mit einem Schmelzpunkt von 80 bis 140°C, vorzugsweise von 100 bis 125°C.

20. Verfahren nach einem oder mehreren der Ansprüche 14 bis 19, **dadurch gekennzeichnet**, daß die aufgedruckte Pastendispersion zwischen 100 und 150°C getrocknet wird.

21. Verfahren nach einem oder mehreren der Ansprüche 14 bis 20, **dadurch gekennzeichnet,** daß die getrocknete Paste zwischen 110 und 160°C gesintert bzw. ausgeliert wird.

22. Verfahren nach einem oder mehreren der Ansprüche 14 bis 21, **dadurch gekennzeichnet**, daß die Folie beim Sintern genadelt gelagert wird.

23. Verfahren nach einem oder mehreren der Ansprüche 14 bis 22, **dadurch gekennzeichnet**, daß die Folie beim Trocknen genadelt gelagert wird.

24. Verfahren nach einem oder mehreren der Ansprüche 14 bis 23, **dadurch gekennzeichnet,** daß die Folie nach dem Sintern abgekühlt und aufgerollt wird.

25. Verfahren nach einem oder mehreren der Ansprüche 14 bis 24, **dadurch gekennzeichnet**, daß die Folie nach dem Sintern bzw Ausgelieren direkt mit einer Textilie kombiniert wird. wobei zumindest der Schmelzkleber durch Einwirkung von Wärme erweicht und anschließend durch Abkühlung wieder erhärtet wird.

26. Verfahren nach einem oder mehreren der Ansprüche 14 bis 25, **dadurch gekennzeichnet**, daß die Membranfolie kontinuierlich ohne Zugspannung in Transportrichtung transportiert wird.

27. Verfahren nach einem oder mehreren der Ansprüche 14 bis 26, **dadurch gekennzeichnet**, daß Pastenpunkte mit einem Raster von 1 bis 40, insbesondere von 11 bis 17 mesh pro inch, aufgedruckt werden.

28. Verfahren nach einem oder mehreren der Ansprüche 14 bis 27, **dadurch gekennzeichnet,** daß die Pastenpunkte mit einer Pastendispersionsmenge von 2 bis 50, insbesondere 10 bis 30 g/m², aufgedruckt werden.

29. Verfahren nach einem oder mehreren der Ansprüche 14 bis 28, **dadurch gekennzeichnet,** daß bei der Kombination der Membranfolie mit der Textilie eine derartige Erwärmung erfolgt und vorzugsweise ein solcher Druck ausgeübt wird, daß Klebstoff aus den Klebstoffpunkten in die Struktur der Textilie eindringt und dabei eine Art Verhakung des Klebstoffes bewirkt.

30. Verfahren nach einem oder mehreren der Ansprüche 14 bis 29, **dadurch gekennzeichnet**, daß vor dem Aufdrucken der Pastendispersionspunkte die Membranfolie mit einem Haftvermittler besprüht wird.

31. Vorrichtung zur Durchführung des Verfahrens nach einem oder mehreren der Ansprüche 14 bis 30, **gekennzeichnet durch** die Kombination eines eine Folienrolle (4) lagernden, exakt positionierenden und spannungslos über Antriebsmittel abwickelnden Abwickelgerätes (3), mit einem die Folie mittels Breithaltern und mit minimaler Längsspannung führenden und faltenfrei transportierenden Einlaufgerät (5), sowie mit einer eine Dispersionspaste mit bestimmtem Raster und bestimmter Menge aufdrukkenden Pastenpunktrotationssiebdruckanlage (6), und mit einem Trockner (9), durch den die Folie auf einem Trageband (8) transportiert ist, sowie mit einer Sinterkammer (10), die mit einer Nadelkette (11) ausgerüstet ist, wobei der Anlage (6) unmittelbar Heißluftdüsen (6a, 6b) im Randbereich der Bahn über und unter der Bahn nachgeordnet sind, die gegen die gerichtet sind, und mit einer Heißlufterzeugungsanlage in Verbindung stehen.

32. Vorrichtung nach Anspruch 31, **dadurch gekennzeichnet**, daß der Sinterkammer (10) ein Aufwickelgerät (12) nachgeordnet ist.

33. Vorrichtung nach Anspruch 31 und/oder 32, **dadurch gekennzeichnet**, daß dem Trockner (9) eine Antistatikklimakammer (7) vorgeordnet ist.

34. Verwendung einer Folie nach einem oder mehreren der Ansprüche 1 bis 13 zur Herstellung eines Laminats mit einer Textilie, insbesondere mit einem Vliesstoff.

35. Verwendung einer Folie nach einem oder mehreren der Ansprüche 1 bis 13 zur Herstellung eines Laminats mit einem Formkörper, insbesondere aus Kunststoff.

36. Verwendung nach Anspruch 35, dadurch **gekennzeichnet**, daß die Folie als Trennmittel in die Form zur Herstellung des Formkörpers tiefgezogen wird.

37. Verwendung einer Folie nach Anspruch 35, dadurch **gekennzeichnet**, daß die Folie auf den Formkörper tiefgezogen wird.

38. Verwendung einer Folie nach einem oder mehreren der Ansprüche 1 bis 13, dadurch **gekennzeichnet**, daß sie beidseitig mit Klebstoffpunkten beschichtet ist und als Klebemittel zwischen zwei zu verbindenden Textilien eingesetzt ist.

39. Verwendung einer Folie nach einem oder mehreren der Ansprüche 1 bis 13 als Klebemittel zwischen zwei zu verbindenden Formkörpern.

## Claims

1. Thermoplastic membrane sheet with a thickness of 10 to 100 µm, which is water-proof and wind-proof but at the same time permeable to water vapour, and is provided on at least one surface with adhesive dots, characterized in that the adhesive is applied in the form of grid-like, non-sticky, dry, or sintered dots(2), the adhesive comprising a thermoplastic applied in the form of an aqueous dispersion melt adhesive paste, said adhesive being fixedly formed on the membrane sheet by drying and sintering.

2. Sheet according to Claim 1, characterized in that the adhesive is foamed.

3. Sheet according to Claim 1 and/or 2, characterized in that the adhesive has microballoons.

4. Sheet according to one or more of Claims 1 to 3, characterized in that the adhesive is printed on.

5. Sheet according to Claim 4, characterized in that the adhesive is applied by a paste dot printing process.

6. Sheet according to one or more of Claims 1 to 5, characterized in that the melt adhesive is an adhesive based on copolyester and has a melting point of 80 to 140°C, preferably 100 to 125°C.

7. Sheet according to one or more of claims 1 to 6, characterized in that the adhesive dots are printed on with a grid size of 1 to 40, in particular 11 to 17, mesh per inch.

8. Sheet according to one or more of Claims 1 to 7, characterized in that the quantity of adhesive is 2 to 50, in particular 10 to 30, g/m².

9. Sheet according to one or more of Claims 1 to 8, characterized in that the weight of the sheet is preferably between 10 and 200 g/m².

10. Sheet according to one or more of Claims 1 to 9, characterized in that it is combined with a textile, the adhesive dots (2) being anchored or hooked in the structure of the textile.

11. Sheet according to one or more of Claims 1 to 10, characterized in that an interlining material is arranged on at least one of its surfaces.

12. Sheet according to Claim 11, characterized in that the interlining material is a multi-region interlining material.

13. Sheet according to Claim 10 and/or 11, characterized in that the connection to the interlining material is effected by means of a melt adhesive according to one or more of Claims 1 to 8.

14. Process for producing a sheet, in particular a membrane sheet, according to one or more of Claims 1 to 13, characterized in that a melt adhesion agent in the form of a dispersion paste is printed onto the sheet by the paste dot printing process, the edge regions preferably being warmed by hot air.

15. Process according to Claim 14, characterized in that a paste dispersion containing the melt adhesion agent in the foamed state is printed on.

16. Process according to Claim 14 and/or 15, characterized in that the melt adhesion agent in the dispersion paste has microballoons.

17. Process according to one or more of Claims 14 to 16, characterized in that a dispersion melt adhesive paste is used, which has the following composition:
35 to 45, preferably 39 to 41 (average 40), parts by weight of dispersing agent
5 to 15, preferably 6 to 8 (average 7), parts by weight of N-mono-substituted sulphonamide
26 to 40, preferably 32 to 34 (average 33), parts by weight of melt adhesive
15 to 25, preferably 19 to 21 (average 20), parts by weight of water.

18. Process according to Claim 17, characterized in that the dispersing agent used is a combination of salts of fatty acids with water-soluble polymers.

19. Process according to Claim 17 and/or 18, characterized in that the melt adhesive used is an adhesive based on copolyester, having a melting point of 80 to 140°C, preferably 100 to 125°C.

20. Process according to one or more of Claims 14 à 19, characterized in that the printed-on paste dispersion is dried at between 100 and 150°C.

21. Process according to one or more of Claims 14 to 20, characterized in that the dried paste is sintered or gelled at between 110 and 160°C.

22. Process according to one or more of Claims 14 to 21, characterized in that the sheet is mounted with needles during sintering.

23. Process according to one or more of Claims 14 to 22, characterized in that the sheet is mounted with needles during drying.

24. Process according to one or more of Claims 14 to 23, characterized in that the sheet is cooled and rolled up after sintering.

25. Process according to one or more of Claims 14 to 24, characterized in that, after sintering or gelling, the sheet is combined directly with a textile, at least the melt adhesion agent being softened by the action of heat and then hardened again by cooling.

26. Process according to one or more of Claims 14 to 25, characterized in that the membrane sheet is transported continuously without tensile stress in the direction of transport.

27. Process according to one or more of Claims 14 to 26, characterized in that paste dots having a grid size of 1 to 40, in particular 11 to 17, mesh per inch are printed on.

28. Process according to one or more of Claims 14 to 27, characterized in that the paste dots are printed on in a quantity of paste dispersion of 2 to 50, in particular 10 to 30, g/m².

29. Process according to one or more of Claims 14 to 28, characterized in that in combining the membrane sheet with the textile warming is effected and preferably a pressure is exerted such that adhesive from the adhesive dots penetrates into the structure of the textile and thus brings about a type of hooking of the adhesive.

30. Process according to one or more of Claims 14 to 29, characterized in that, before printing on the paste dispersion dots, the membrane sheet is sprayed with an adhesion promoter.

31. Apparatus for carrying out the process according to one or more of Claims 14 to 30, characterized by the combination of an unwinding device (3) which stores a sheet roll (4), positions it exactly and unwinds it without tension by way of drive means, having an intake device (5) which guides the sheet by means of stretcher bars with minimum longitudinal tension and transports it without folds, and having a paste dot rotary screen printing system (6) which prints on a dispersion paste of a particular grid size and a particular quantity, and having a drying unit (9) through which the sheet is transported on a conveyor belt (8), and having a sintering chamber (10) which is equipped with a pin chain (11), preferably hot air nozzles (6a, 6b) being arranged directly downstream of the system (6) in the edge region of the web above and below the web and being directed towards the latter, and being connected to a hot air generating system.

32. Apparatus according to Claim 31, characterized in that a winding device (12) is arranged downstream of the sintering chamber (10).

33. Apparatus according to Claim 31 and/or 32, characterized in that an anti-static climatic chamber (7) is arranged upstream of the drying unit (9).

34. Use of a sheet according to one or more of Claims 1 to 13, for producing a laminate with a textile, in particular with a bonded fabric.

35. Use of a sheet according to one or more of Claims 1 to 13 for producing a laminate with a shaped body, in particular of plastics.

36. Use according to Claim 35, characterized in that the sheet is deep-drawn as the parting agent into the mould for producing the shaped body.

37. Use of sheet according to one or more of Claims 1 to 35, characterized in that the sheet is deep-drawn onto the shaped body.

38. Use of sheet according to Claim 13, characterized in that it is coated on both sides with adhesive dots and is inserted as an adhesive between two textiles to be connected.

39. Use of a sheet according to one or more of Claims 1 to 13 as an adhesive between two shaped bodies to be connected.

## Revendications

1. Feuille thermoplastique servant de membrane, d'une épaisseur de 10 à 100 µm, étanche à l'eau et au vent, mais perméable à la vapeur d'eau et munie sur au moins une face d'une colle sous forme de points, caractérisée en ce que la colle est appliquée sous la forme d'un réseau de points (2) secs, non collants ou frittés, la colle comprenant un thermoplaste sous la forme d'une pâte de dispersion aqueuse thermocollante, qui par séchage et frittage adhère à la feuille de membrane.

2. Feuille selon la revendication 1, caractérisée en ce qu'on a fait mousser la colle.

3. Feuille selon la revendication 1 et/ou 2, caractérisée en ce que la colle contient des microbulles.

4. Feuille selon l'une ou plusieurs des revendications 1 à 3, caractérisée en ce que la colle a été appliquée par impression.

5. Feuille selon la revendication 4, caractérisé en ce que la colle est appliquée au moyen d'un procédé d'impression de points de pâte.

6. Feuille selon l'une ou plusieurs des revendications 1 à 5, caractérisée en ce que la colle à fusion est une colle à base de co-polyester ayant un point de fusion de 80 à 140°C, de préférence de 100 à 125°C.

7. Feuille selon l'une ou plusieurs des revendications 1 à 6, caractérisée en ce que les points de colle sont imprimés pour former une trame de 1 à 40 en particulier de 11 à 17 mailles par pouce.

8. Feuille selon l'une ou plusieurs des revendications 1 à 7, caractérisée en ce que la quantité de colle est de 2 à 50, en particulier de 10 à 30 g/m2.

9. Feuille selon l'une ou plusieurs des revendications 1 à 8, caractérisée en ce que le poids de la feuille servant de membrane est, de préférence, compris entre 10 et 200 g/m2.

10. Feuille selon l'une ou plusieurs des revendications 1 à 9, caractérisée en ce qu'elle est combinée avec un textile, les points de colle (2) étant ancrés ou accrochés dans la structure du textile.

11. Feuille selon l'une ou plusieurs des revendications 1 à 10, caractérisée en ce que sur au moins une de ses faces est déposée une matière de garniture.

12. Feuille selon la revendication 11, caractérisée en ce que la matière de garniture est une matière à utilisation multiple.

13. Feuille selon la revendication 10 et/ou 11, caractérisée en ce que la liaison de la matière de garniture avec une colle à fusion s'est effectuée selon l'une ou plusieurs des revendications 1 à 8.

14. Procédé de fabrication d'une feuille, en particulier d'une feuille servant de membrane, selon l'une ou plusieurs des revendications 1 à 13, caractérisé en ce qu'une colle à fusion ayant la forme d'une pâte dispersante est imprimée sur la feuille selon le procédé d'impression de points de pâte, les régions du bord étant, préférence, chauffés à l'air chaud.

15. Procédé selon la revendication 14, caractérisé en ce qu'une pâte dispersante est imprimée et maintient la colle à fusion dans un état mousseux.

16. Procédé selon la revendication 14 et/ou 15, caractérisé en ce que la colle à fusion dans la pâte dispersante contient des microbulles.

17. Procédé selon l'une ou plusieurs des revendications 14 à 16, caractérisé en ce qu'une pâte dispersante à colle à fusion est utilisée dont la composition est la suivante :
35 à 45, de préférence 39 à 41 (ó 40) parties en poids de produit dispersant,
5 à 15, de préférence 6 à 8 (ó 7) de parties en poids de sulfonamide N-monosubstitué,
26 à 40, de préférence 32 à 34 (ó 33) de parties en poids de colle à fusion,
15 à 25, de préférence 19 à 21 (ó 20) de parties en poids d'eau.

18. Procédé selon la revendication 17, caractérisé en ce qu'une combinaison de sels d'acides gras avec des polymères solubles dans l'eau est utilisée en tant que produit dispersant.

19. Procédé selon la revendication 17 et/ou 18, caractérisé en ce qu'une colle à base de copolyester est utilisée en tant que colle à fusion, ayant un point de fusion de 80 à 140°C, de préférence de 100 à 125°C.

20. Procédé selon l'une ou plusieurs des revendications 14 à 19, caractérisé en ce que la pâte dispersante imprimée est séchée entre 100 et 150°C.

21. Procédé selon l'une ou plusieurs des revendications 14 à 20, caractérisé en ce que la pâte séchée est frittée ou éliminée par gélification entre 110 et 160°C.

22. Procédé selon l'une ou plusieurs des revendications 14 à 21, caractérisé en ce que la feuille est mise en position sur des épingles lors du frittage.

23. Procédé selon l'une ou plusieurs des revendications 14 à 22, caractérisé en ce que la feuille est mise en position sur des épingles lors du séchage.

24. Procédé selon l'une ou plusieurs des revendications 14 à 23, caractérisé en ce que la feuille est refroidie et enroulée après le frittage.

25. Procédé selon l'une ou plusieurs des revendications 14 à 24, caractérisé en ce que la feuille est combinée directement avec le textile après le frittage ou l'élimination par gélification, la colle à fusion au moins étant ramollie par l'action de la chaleur et ensuite durcie à nouveau par refroidissement.

26. Procédé selon l'une ou plusieurs des revendications 14 à 25, caractérisé en ce que la feuille servant de membrane est transportée en continu dans la direction de transport, sans tension de traction.

27. Procédé selon l'une ou plusieurs des revendications 14 à 26, caractérisé en ce que les points de pâte sont imprimés pour former une trame de 1 à 40, en particulier de 11 à 17 mailles par pouce.

28. Procédé selon l'une ou plusieurs des revendications 14 à 27, caractérisé en ce que les points de pâte sont imprimés avec une quantité de pâte dispersante de 2 à 50, en particulier de 10 à 30 g/m2.

29. Procédé selon l'une ou plusieurs des revendications 14 à 28, caractérisé en ce que, lors de la combinaison de la feuille servant de membrane avec le textile, un réchauffement et une pression tels sont engendrés que la colle des points de colle pénètre dans la structure du textile et entraîne une sorte d'accrochage de la colle.

30. Procédé selon l'une ou plusieurs des revendications 14 à 29, caractérisé en ce qu'avant l'impression des points de pâte dispersante, un agent d'adhérence est appliqué par pulvérisation sur la feuille servant de membrane.

31. Dispositif pour la mise en oeuvre du procédé selon l'une ou plusieurs des revendications 14 à 30, caractérisé par la combinaison d'un appareil de déroulement (3) positionnant exactement le rouleau de feuille (4) et la déroulant sans tension à l'aide de moyens d'entraînement, avec un appareil receveur (5) guidant la feuille au moyen de tendeurs de largeur avec une tension longitudinale minimum et sans plis, ainsi qu'avec un dispositif rotatif de sérigraphie de points de pâte (6) imprimant une pâte dispersante avec une trame déterminée et une certaine quantité de matière, et avec un dispositif de séchage (9) à travers lequel la feuille est transportée sur une courroie de soutien (8), ainsi qu'avec une chambre de frittage (10) équipée d'une chaîne d'aiguilles (11), des buses d'air chaud (6a, 6b) étant disposées en aval du dispositif (6) dans les régions périphériques de la bande immédiatement au-dessus et au-dessous de celle-ci, dirigées vers ladite bande et reliées à une installation de production d'air chaud.

32. Dispositif selon la revendication 31, caractérisé en ce que la chambre de frittage (10) est disposée en aval de l'appareil d'enroulement (12).

33. Dispositif selon la revendication 31 et/ou 32, caractérisé en ce qu'une chambre climatisée antistatique (7) est disposée en amont du séchoir (9).

34. Utilisation d'une feuille selon l'une ou plusieurs des revendications 1 à 13, pour la fabrication d'un laminé avec une étoffe, en particulier une étoffe non tissée.

35. Utilisation d'une feuille selon l'une ou plusieurs des revendications 1 à 13 pour la fabrication d'un laminé muni d'un corps moulé, en particulier en matière synthétique.

36. Utilisation d'une feuille selon la revendication 35, caractérisée en ce que la feuille a été emboutie, en tant que moyen de séparation, dans le moule pour fabriquer le corps moulé.

37. Utilisation d'une feuille selon la revendication 35, caractérisée en ce que la feuille est emboutie sur le corps moulé.

38. Utilisation d'une feuille selon l'une ou plusieurs des revendications 1 à 13, caractérisée en ce qu'elle est revêtue des deux côtés de points de colle et insérée en tant que matière de collage entre deux textiles à relier.

39. Utilisation d'une feuille selon l'une ou plusieurs des revendications 1 à 13 en tant que matière de collage entre deux corps moulés à relier.
